# EUROPEAN PATENT APPLICATION

(11) **EP 4 852 101 A1**
(43) Date of publication of application: **09.12.2026**
(21) Application number: 26178989.5
(22) Date of filing: 15.05.2026
(51) Int. Cl.: H01M 4/66, H01M 10/0525, H01M 4/02

(54) **POSITIVE ELECTRODE FOR RECHARGEABLE LITHIUM BATTERY AND RECHARGEABLE LITHIUM BATTERY INCLUDING THE SAME**

(30) Priority: 02.06.2025 KR 20250072170; 03.12.2025 KR 20250188881
(71) Applicant: SAMSUNG SDI CO., LTD., Yongin-si, Gyeonggi-do 17084 (KR)
(72) Inventor: Jeong, Hohyun, Yongin-si, Gyeonggi-do 17084 (KR); Han, Seunghun, Yongin-si, Gyeonggi-do 17084 (KR); Kil, Kichun, Yongin-si, Gyeonggi-do 17084 (KR)
(74) Representative: Michalski Hüttermann & Partner mbB

(57) **Abstract**

The present disclosure relates to a positive electrode for a rechargeable lithium battery. The positive electrode includes a positive electrode current collector, a functional layer on the positive electrode current collector, and a positive electrode active material layer on the functional layer. The functional layer includes ceramic particles, and an additive. The additive includes at least one of a silicon-based additive, an acrylic-based additive, or a combination thereof.

## Description

### CROSS-REFERENCE TO RELATED APPLICATION

This application claims priority to Korean Patent Application No. 10-2025-0188881 filed on December 3, 2025 and Korean Patent Application No. 10-2025-0072170 filed on June 2, 2025 in the Korean Intellectual Property Office.

### BACKGROUND

The present disclosure relates to a positive electrode for a rechargeable lithium battery, and a rechargeable lithium battery including the positive electrode.

With increasing use of battery-powered electronic devices such as, e.g., mobile phones, notebook computers, electric vehicles, and the like, the demand for rechargeable batteries with high energy density and large capacity is increasing. Accordingly, enhancing the performance of rechargeable lithium batteries may be advantageous.

A rechargeable lithium battery generally includes a positive electrode, a negative electrode, and an electrolyte. Both the positive and negative electrodes contain active materials capable of lithium-ion intercalation and deintercalation. Electrical energy is generated through oxidation and reduction reactions as lithium ions move between the electrodes during charging and discharging.

### SUMMARY

An example embodiment of the present disclosure includes a positive electrode that is desired or improved in safety and high-temperature life characteristics.

An example embodiment of the present disclosure includes a rechargeable lithium battery that is desired or improved in safety and high-temperature life characteristics.

According to an example embodiment of the present disclosure, a positive electrode may include a positive electrode current collector, a functional layer on the positive electrode current collector, and a positive electrode active material layer on the functional layer. The functional layer may include ceramic particles and an additive. The additive may include at least one of a silicone-based additive, an acrylic-based additive, or a combination thereof.

According to an example embodiment of the present disclosure, a positive electrode may include a positive electrode current collector, and a positive electrode mixture layer on the positive electrode current collector. The positive electrode mixture layer may include a functional layer and a positive electrode active material layer that are stacked, e.g., sequentially stacked, on the positive electrode current collector. The functional layer may include ceramic particles, the positive electrode active material layer may include positive electrode active material particles. The positive electrode mixture layer may include at least one of a silicone-based additive, an acrylic-based additive, or a combination thereof.

According to an example embodiment of the present disclosure, a rechargeable lithium battery may include a positive electrode as described above, a negative electrode, and an electrolyte between the positive electrode and the negative electrode.

### BRIEF DESCRIPTION OF DRAWINGS

FIG. 1 is a schematic conceptual diagram of a rechargeable lithium battery according to example embodiments of the present disclosure.
FIG. 2 to FIG. 5 are schematic views illustrating various types of rechargeable lithium batteries according to example embodiments of the present disclosure. FIG. 2 shows a cylindrical battery, FIG. 3 shows a prismatic battery, and FIGS. 4 and 5 show pouch-type batteries.
FIG. 6 is a schematic view of a rechargeable lithium battery according to example embodiments of the present disclosure.
FIG. 7 is a cross-sectional view of a positive electrode according to example embodiments of the present disclosure.
FIG. 8 is an enlarged cross-sectional view of the "M" region of FIG. 7.
FIG. 9 is an enlarged cross-sectional view of the "M" region of FIG. 7, showing the state of the positive electrode after a nail penetration test.
FIG. 10 is a cross-sectional view of a functional layer according to example embodiments of the present disclosure.
FIG. 11 to FIG. 14 are schematic views illustrating a method of manufacturing a positive electrode according to example embodiments of the present disclosure.

### DETAILED DESCRIPTION

To fully understand the configuration and effects of the present disclosure, some example embodiments are described with reference to the accompanying drawings. However, the present disclosure is not limited to the following example embodiments and may be implemented in various forms. The example embodiments are provided solely to illustrate the present disclosure and to enable those skilled in the art to fully understand its scope.

In this description, when an element is described as being "on" another element, the element may be directly on the other element, or one or more intervening elements may be present therebetween. In the drawings, certain thicknesses may be exaggerated to better illustrate technical details. Throughout the specification, like reference numerals indicate like elements.

The example embodiments described herein may be illustrated using sectional and/or plan views, which are presented as idealized examples of the present disclosure. The thicknesses of layers and regions in the drawings may be exaggerated for clarity. The regions shown in the drawings are for illustrative purposes and should not be construed as limiting the scope of the present disclosure. Although terms such as "first," "second," and "third" may be used to describe various elements, these terms are merely for distinction and do not imply any particular order or hierarchy. The example embodiments described and illustrated herein include complementary variations.

The terms used in this description serve only to explain various example embodiments, and are not intended to limit the present disclosure. Unless explicitly stated otherwise, singular forms may also include plural forms. The terms "comprises/includes" and "comprising/including" do not exclude the presence or addition of one or more other components.

In this description, the phrase "combination thereof" may refer to a mixture, a stack, a composite, a copolymer, an alloy, a blend, or a reaction product.

The phrases "A or B," "at least one of A and B," "at least one of A or B," "A, B, or C," "at least one of A, B, and C," and "at least one of A, B, or C" include any one or all possible combinations of the listed elements.

Unless otherwise specifically defined, the term "particle diameter" refers to an average particle diameter. The particle diameter may represent the median particle size (D50), which corresponds to the diameter of particles at 50 vol% in a cumulative particle size distribution. The average particle diameter (D50) can be measured using widely known methods, such as a particle size analyzer, transmission electron microscope (TEM) imaging, or scanning electron microscope (SEM) imaging. Alternatively, dynamic light scattering may be used, where particle counts within size ranges are analyzed to calculate the average particle diameter (D50). Additionally, a laser scattering method may be employed, in which a target particle is dispersed in a solvent, introduced into a laser scattering particle measurement device (e.g., MT3000 from Microtrac, Inc.), irradiated with ultrasonic waves at 28 kHz and 60 W, and subsequently analyzed to determine the D50 value based on a 50% cumulative particle size distribution.

In some example embodiments, the average particle diameter may be determined by randomly selecting 100 or more particles from an electron microscope image. Alternatively, the average particle diameter may be measured using a particle size analyzer and defined as the diameter corresponding to 50 vol% in a cumulative particle size distribution.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

The importance of safety has been increasing due to the ignition problem of a rechargeable lithium battery, and various safety evaluations such as nail penetration evaluation in which a rechargeable lithium battery is penetrated with a thin nail have been performed in the art.

In this regard, a method for improving the safety of a rechargeable lithium battery by inserting a functional layer made of ceramic particles between a positive electrode current collector and a positive electrode active material layer is known.

However, the functional layer made of ceramic particles has a low coating uniformity, and pinholes can be generated, and the generation of the pinholes can rather impair the safety, high-temperature life characteristics, and the like of the rechargeable lithium battery.

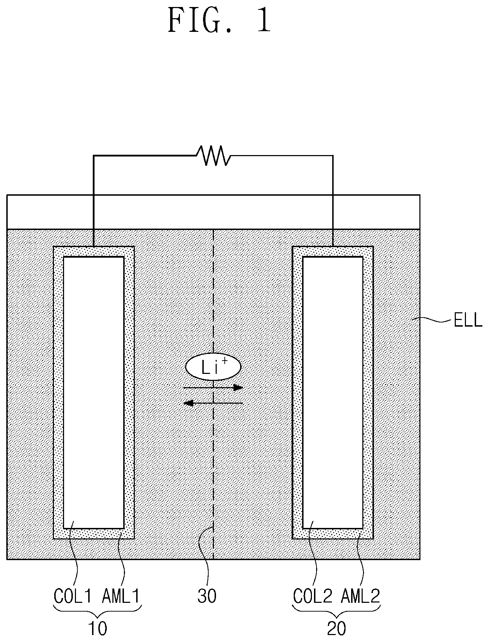

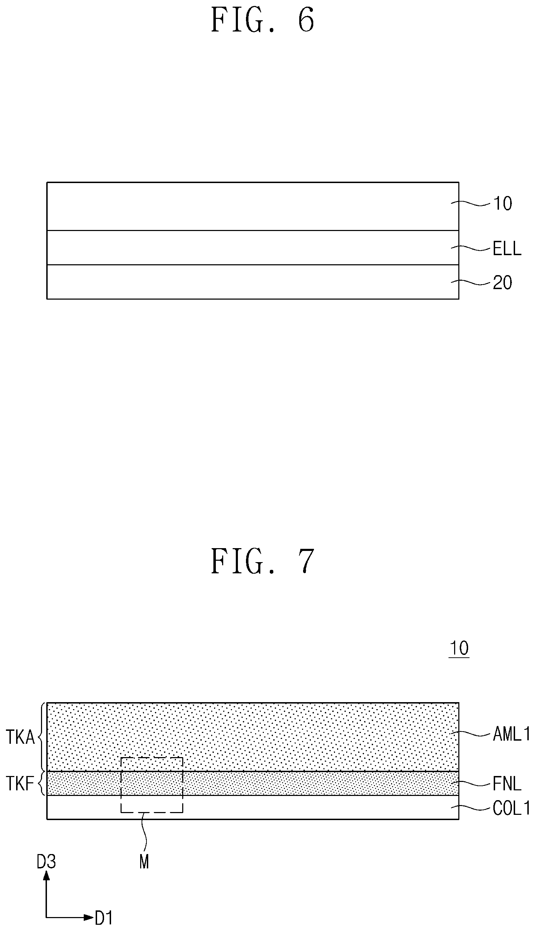

FIG. 1 is a cross-sectional view of a rechargeable lithium battery according to example embodiments of the present disclosure. FIG. 6 schematically illustrates a rechargeable lithium battery according to example embodiments of the present disclosure. Referring to FIG. 1 and FIG. 6, the rechargeable lithium battery may include a positive electrode 10, a negative electrode 20, a separator 30, and an electrolyte solution ELL.

The positive electrode 10 and the negative electrode 20 may be spaced apart from each other by the separator 30. The separator 30 may be disposed between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be impregnated in the electrolyte solution ELL.

The electrolyte solution ELL may be or include a medium for transferring lithium ions between the positive electrode 10 and the negative electrode 20. In the electrolyte solution ELL, the lithium ions may move through the separator 30 toward the positive electrode 10 or the negative electrode 20.

### Positive electrode 10

In the present specification, the current collector COL1 and the positive electrode collector COL1 may be used to refer to the same feature COL1.

FIG. 7 is a cross-sectional view of a positive electrode 10 according to example embodiments of the present disclosure. Referring to FIG. 7, a positive electrode 10 according to an example embodiment of the present disclosure may include a positive electrode current collector COL1, a functional layer FNL, and a positive electrode active material layer AML1. According to one embodiment of the present invention, the positive electrode current collector (COL1) may have an upper surface that is parallel to a first direction (D1) and a second direction (D2) intersecting the first direction (D1), and is perpendicular to a third direction (D3). For example, the first direction (D1), the second direction (D2), and the third direction (D3) may be directions orthogonal to each other. As an example, the functional layer FNL and the positive electrode active material layer AML1 may be arranged, e.g., sequentially arranged, on the positive electrode current collector COL1. The positive electrode active material layer AML1 may include a positive electrode active material, and may further include a binder and/or a conductive material. The positive electrode active material is described below.

The positive electrode 10 according to one or more example embodiments of the present disclosure may include a positive electrode mixture layer. The positive electrode mixture layer may include the functional layer FNL and the positive electrode active material layer AML1 stacked, e.g., sequentially stacked, on the positive electrode current collector COL1. The functional layer FNL may include ceramic particles CMP, and the positive electrode active material layer AML1 may include positive electrode active material particles.

The positive electrode mixture layer may include at least one of a silicone-based additive, an acrylic-based additive, or a combination thereof. The functional layer FNL and/or the positive electrode active material layer AML1 may include at least one of a silicon-based additive, an acrylic-based additive, or a combination thereof.

For example, the functional layer (FNL) may include at least one of a silicone-based additive, an acrylic-based additive, or a combination thereof. Since the positive electrode mixture layer may include the functional layer (FNL) and the positive electrode active material layer (AML1), when the functional layer (FNL) includes at least one of the above additives, the presence of the additive may be detected based on the positive electrode mixture layer as a whole. For example, the presence of the additive may be detected using analytical techniques such as energy-dispersive spectroscopy (EDS) or gas chromatographymass spectrometry (GC-MS).

The positive electrode current collector COL1 may provide a reference plane on which the positive electrode active material layer AML1 is disposed. The positive electrode current collector COL1 may include, for example, a plate or foil including at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

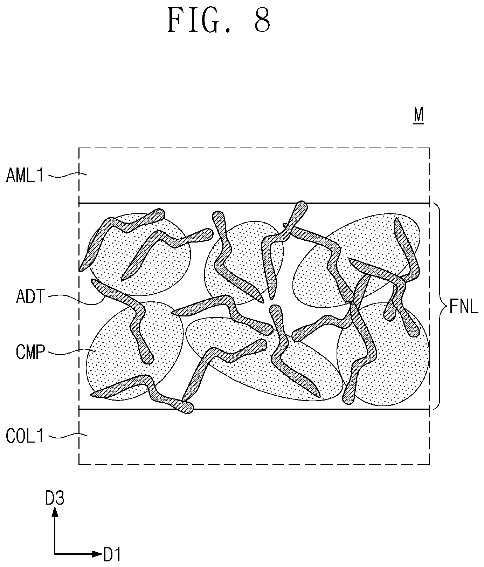

FIG. 8 is an enlarged view of the "M" region of FIG. 7, and is a cross-sectional enlarged view of a positive electrode according to one or more example embodiments of the present disclosure. Referring to FIG. 8, the positive electrode 10 may include the functional layer FNL. The functional layer FNL may be disposed on at least one surface of the positive electrode current collector COL1. The functional layer FNL may be interposed between the positive electrode active material layer AML1 and the positive electrode current collector COL1. The functional layer FNL may include the ceramic particles CMP and an additive ADT. The functional layer FNL may block current when an internal short-circuit occurs to reduce or prevent ignition. The functional layer FNL may reduce or prevent a short-circuit resulting from structural deformation or external impact. For example, the functional layer FNL may improve the penetration stability.

The functional layer (FNL) may include ceramic particles (CMP). The surfaces of the ceramic particles (CMP) may be coated with a carbon material to enhance electrical conductivity.

The ceramic particles (CMP) may include at least one of boehmite (AlOOH), alumina (aluminum oxide, Al₂O₃), aluminum nitride (AlN), boron nitride (BN), zirconia (zirconium dioxide, ZrO₂), titania (titanium dioxide, TiO₂), silica (silicon dioxide, SiO₂), silicon nitride (Si₃N₄), zeolite, kaolinite, and combinations thereof.

For example, the ceramic particles (CMP) may be boehmite (AlOOH). Boehmite is an aluminum hydroxide-based ceramic having a fine flake or needle-like structure, which may exhibit a high surface area and uniform dispersibility. In addition, since boehmite may have -OH groups abundantly present on its surface, it may exhibit improved interfacial adhesion with a binder or carbon-based material. Due to these structural characteristics, boehmite may improve the heat resistance and mechanical stability of the functional layer (FNL). An example embodiment cathode including boehmite as the ceramic particles (CMP) in the functional layer (FNL) may provide a rechargeable lithium battery suitable for various safety evaluations such as nail penetration tests.

In another example, the ceramic particles (CMP) may be alumina (aluminum oxide, Al₂O₃). Alumina may an inorganic oxide having both high hardness and electrical insulation, which may improve the mechanical strength of the functional layer (FNL) while preventing direct electrical contact between electrode particles. For instance, fine α- or γ-phase alumina particles may exhibit uniform distribution and high thermal conductivity, thereby suppressing local heat generation in the electrode and improving temperature uniformity within the cell. A cathode including alumina as the ceramic particles (CMP) in the functional layer (FNL) may thus secure excellent durability in thermal runaway and nail penetration evaluations.

In one example embodiment, the ceramic particles (CMP) may be aluminum nitride (AlN). Aluminum nitride may have both high thermal conductivity and low electrical conductivity, and thus may rapidly dissipate heat generated during charge and discharge processes, preventing local heating or structural deformation of the electrode. Accordingly, a cathode including aluminum nitride as the ceramic particles (CMP) in the functional layer (FNL) may simultaneously improve the thermal stability and nail penetration resistance of the battery.

In yet another example embodiment, the ceramic particles (CMP) may be boron nitride (BN). Boron nitride may a layered ceramic having a hexagonal (h-BN) crystal structure, which may exhibit improved electrical insulation, high thermal conductivity, and a low friction coefficient. Boron nitride may form a thermal diffusion path within the functional layer (FNL) to suppress temperature rise in the electrode, and may act as a stressdissipation layer when an external force or impact is applied. Accordingly, a cathode including boron nitride as the ceramic particles (CMP) in the functional layer (FNL) may secure improved durability and stability in nail penetration or external impact tests.

The amount of the ceramic particles CMP in the functional layer FNL may be in a range of ≥ 80 wt% to ≤ 90 wt% relative to the total weight of the functional layer FNL. Within the above range, it is possible to uniformly, or substantially uniformly, provide quality such as, e.g., safety of the rechargeable lithium battery.

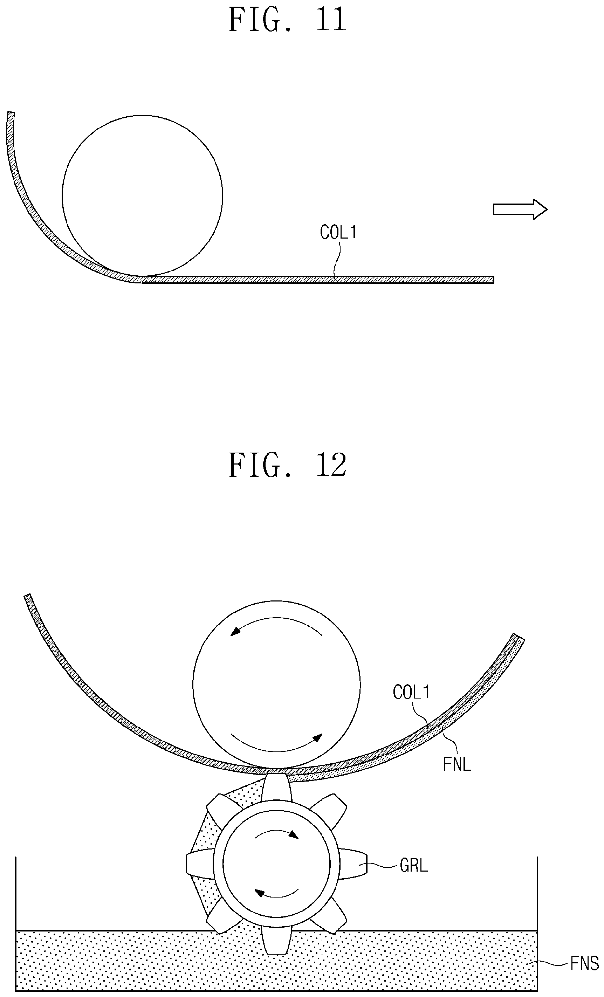

The functional layer FNL may include the additive ADT. The additive ADT may include at least one of a silicone-based additive, an acrylic-based additive, or a combination thereof. The additive ADT may reduce the surface tension of the functional layer slurry (FNS, see FIG. 12) containing the additive ADT, thereby enabling substantially uniform, or substantially uniform, coating of the functional layer FNL and reducing or suppressing the formation of pinholes therein. Accordingly, the positive electrode 10 of one or more example embodiments may uniformly, or substantially uniformly, provide quality such as, e.g., safety and high-temperature life characteristics of the rechargeable lithium battery, while reducing or suppressing the formation of pinholes in the functional layer FNL.

The silicone-based additive may include at least one of polydimethylsiloxane, polymethylalkylsiloxane, or a combination thereof. The polydimethylsiloxane may include methyl groups (C1 alkyl groups). In the polymethylalkylsiloxane, the alkyl group may have a carbon number of C2 to C18, or C2 to C8. The acrylic-based additive may include a polyacrylate. For example, the additive ADT may be or include the silicone-based additive such as polydimethylsiloxane having a weight average molecular weight of several thousands to several tens of thousands g/mol, or polymethylalkylsiloxane having an average molecular weight of several thousands to several tens of thousands g/mol. For example, the additive ADT may be or include the acrylic-based additive such as polyacrylate having an average molecular weight of several thousands to several tens of thousands g/mol. The weight average molecular weight may be measured by, e.g., gel permeation chromatography (GPC).

The amount of the additive ADT may be in a range from ≥ 0.08 wt% to ≤ 0.8 wt%, from ≥ 0.08wt% to ≤ 0.4 wt%, or from ≥ 0.08 wt% to ≤ 0.2 wt% relative to the total weight of the functional layer FNL. Within the above range, the pinhole-reducing or pinholesuppressing effect of the additive ADT can be enhanced.

In order to confirm whether the functional layer FNL according to the present disclosure includes the additive ADT, the positive electrode of the secondary battery cell may be separated and analyzed. In one or more example embodiments, the positive electrode of the secondary battery cell may be separated and analyzed to confirm whether the functional layer FNL includes polydimethylsiloxane (PDMS). Since polydimethylsiloxane (PDMS) is an organosilicon-based polymer in which methyl groups (-CH₃) are repeatedly bonded to a silicon-oxygen (Si-O-Si) backbone structure, an analysis method based on such structural characteristics may be employed.

For example, after the secondary battery cell is disassembled, a sample may be prepared by cutting the laminate on the positive electrode current collector. To separate (or expose) the functional layer FNL, the sample may be treated by immersing the sample in a solvent such as, e.g., N-methyl-2-pyrrolidone (NMP) or dimethyl sulfoxide (DMSO), or by performing a mechanical peeling process.

FT-IR (Fourier Transform Infrared) spectroscopy may be performed on the separated functional layer FNL or on the sample in which the functional layer FNL is exposed. Based on the characteristic structural features of polydimethylsiloxane (PDMS), such as the silicon-oxygen (Si-O-Si) backbone and methyl groups (-CH₃), the presence of PDMS can be identified by analyzing specific absorption peaks. These include an Si-O-Si stretching peak around 1,000 to 1,100 cm⁻¹, a Si-CH₃ peak around 1,250 cm⁻¹, and a C-H stretching vibration peak around 2,960 cm⁻¹ attributable to the -CH₃ groups. If (when) all three peaks are detected, it may be determined that the functional layer FNL contains polydimethylsiloxane (PDMS).

For more precise qualitative analysis, X-ray Photoelectron Spectroscopy (XPS) may be performed on the surface of the functional layer FNL sample. For example, the Si-O bonding characteristics of polydimethylsiloxane (PDMS) may be confirmed by detecting the presence of a Si 2p peak in the range of approximately 101 eV to 103 eV and analyzing its binding energy. Additionally, the presence of methyl groups (-CH₃) may be determined by analyzing the C 1s peak.

Time-of-Flight Secondary Ion Mass Spectrometry (TOF-SIMS) may be performed on the sample of the functional layer FNL for high-sensitivity and high-precision analysis. For example, the presence of polydimethylsiloxane (PDMS) may be more reliably determined by detecting fragment ions derived from PDMS, such as [Si(CH₃)₃]⁺ or [SiO₃]⁻.

Through the above series of analysis processes, it is possible to qualitatively evaluate whether polydimethylsiloxane (PDMS) is added to the functional layer FNL. In particular, FT-IR is useful as a non-destructive and easy-to-use primary analysis tool, and XPS or TOF-SIMS can be used as a complementary precision analysis means when necessary.

The functional layer FNL may further include a binder. The binder may provide a binding force between particles in the functional layer (FNL) and may provide an adhesion force with an adjacent layer to improve the structural stability of the positive electrode. The binder may be or include at least one of a non-aqueous binder and an aqueous binder. The non-aqueous binder may include, but is not limited to, at least one of polyvinylchloride, carboxylated polyvinylchloride, polyvinylfluoride, ethylene propylene copolymer, polystyrene, polyurethane, polytetrafluoroethylene, polyvinylidene fluoride, polyethylene, polypropylene, polyamideimide, polyimide, or a combination thereof. The aqueous binder may include, but is not limited to, at least one of styrene-butadiene rubber, (meth)acrylated styrene-butadiene rubber, (meth)acrylonitrile-butadiene rubber, (meth)acrylic rubber, butyl rubber, fluororubber, polyethyleneoxide, polyvinylpyrrolidone, polyepichlorohydrin, polyphosphazene, poly(meth)acryllonitrile, ethylenepropylenediene copolymer, polyvinyl pyridine, chlorosulfonated polyethylene, latex, polyester resin, (meth)acrylic resin, phenolic resin, epoxy resin, polyvinylalcohol, or a combination thereof.

Polyvinylidene fluoride (PVDF) has high solubility in an organic solvent and exhibits desired or improved dispersibility in the slurrying process. The functional layer FNL using a polyvinylidene fluoride (PVDF) binder may have desired or improved mechanical adhesion and safety. The amount of the binder in the functional layer FNL may be in a range of > 8.5 wt% to ≤ 19.5 wt%, ≥ 9 wt% to ≤ 16 wt%, or ≥ 10 wt% to ≤ 13 wt% relative to the total weight of the functional layer FNL.

The functional layer FNL may further include a conductive material. The conductive material may impart conductivity to the electrode, and any electronic conductive material can be used in the battery configured as long as the electronic conductive material does not cause an adverse chemical change in the battery. The conductive material may include, for example, but is not limited to, a carbon-based material such as at least one of natural graphite, artificial graphite, carbon black, acetylene black, Ketjen black, carbon fiber, carbon nanotube, carbon nanofiber, carbon nanobelt, carbon nanorod, or graphene; a metal-based material in the form of a metal powder or a metal fiber containing at least one of copper, nickel, aluminum, silver, or the like; a conductive polymer such as a polyphenylene derivative; or a mixture thereof. The amount of the conductive material in the functional layer FNL may be in a range of ≥ 0.5 wt% to ≤ 1.5 wt% with respect to the total weight of the functional layer FML.

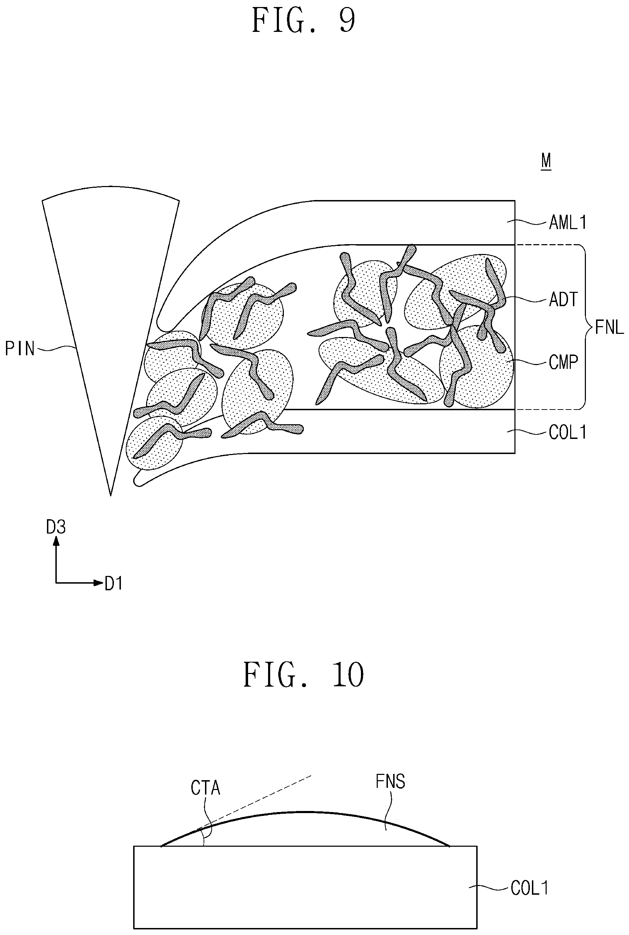

FIG. 9 is an enlarged cross-sectional view of the positive electrode after a nail penetration test according to one or more example embodiments, showing an enlarged view of the "M" region in FIG. 7. Referring to FIG. 9, when the nail PIN penetrates the positive electrode 10, the functional layer FNL on the positive electrode current collector COL1 may reduce or prevent physical contact between the positive electrode active material layer AML1 and the positive electrode current collector COL1 during penetration. Since the coating property of the functional layer FNL is improved by the inclusion of the additive ADT, resulting in a uniform, or substantially uniform film, the functional layer FNL may maintain the shape thereof and resist breakage even upon penetration. As a result, it is possible to reduce or prevent the cell from being electrically connected through the nail PIN.

The thickness of the functional layer FNL may be in a range of ≥ 0.1 µm to ≤ 10 µm, ≥ 0.3 µm to ≤ 5 µm, or ≥ 0.5 µm to ≤ 4 µm. When the thickness of the functional layer FNL is less than the above range, the electrical contact blocking effect described above may not be sufficiently exhibited. Conversely, when the thickness exceeds the above range, the resistance of the positive electrode 10 may become excessively high, thereby deteriorating the performance of the cell. Nevertheless, even when the functional layer FNL is formed with a small thickness within the appropriate range, sufficient safety can be ensured without impairing the battery capacity.

When the functional layer FNL is formed to have a small thickness as described above, the positive electrode active material layer AML1 can have a relatively large thickness. When the positive electrode active material layer AML1 is thick, the amount of the positive electrode active materials increases, so that the energy density can be improved. Referring again to FIG. 7, the ratio of the thickness TKF of the functional layer FNL to the thickness TKA of the positive electrode active material layer AML1 may be in a range of ≥ 1:5 to ≤ 1:100, 1:10 to 1:50, or 1:15 to 1:30. When the above range is satisfied, the capacity of the rechargeable lithium battery can be improved.

### Positive Electrode Active Material

The positive electrode 10 according to an example embodiment of the present disclosure may include a positive electrode active material layer AML1. The positive electrode active material layer AML1 may be disposed on the functional layer FNL. The positive electrode active material layer AML1 may include a positive electrode active material. The positive electrode active material layer AML1 may include a conductive material and/or a binder. In addition, the positive electrode active material layer AML1 may further include other commonly used additives. As an example, the positive electrode active material layer AML1 may further include an additive that can constitute a sacrificial positive electrode material.

The positive electrode active material may include a compound (lithiated intercalation compound) that is capable of intercalating and deintercalating lithium. For example, at least one of a composite oxide of lithium and a metal such as or including at least one of cobalt, manganese, nickel, and combinations thereof may be included.

The composite oxide may be or include a lithium transition metal composite oxide. Examples of the composite oxide may include at least one of lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. LiₐA_{1-b}X_{b}O_{2-c}D_{c} (0.90 ≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤ c≤ 0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤ f≤ 2); or LiₐFePO₄ (0.90≤a≤1.8).

In the above Chemical Formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al, or a combination thereof.

The positive electrode active material may include, for example, at least one of a lithium nickel-based oxide represented by the following chemical formula 11, a lithium cobalt-based oxide represented by the following chemical formula 12, a lithium iron phosphate-based compound represented by the following chemical formula 13, a cobalt-free lithium nickel-manganese-based oxide represented by the following chemical formula 14, or a combination thereof.

Chemical formula 11: Liₐ₁Niₓ₁M¹_{y1}M²_{z1}O_{2-b1}X_{b1}.

In the chemical formula 11, 0.9≤a1≤1.8, 0.3≤x1≤1, 0≤y1≤0.7, 0≤z1≤0. 7, 0.9≤x1+y1+z1≤1.1, and 0≤b1≤0.1, M¹ and M² each independently is or includes at least one or more of Al, B, Ba, Ca, Ce, Co, Cr, Cu, Fe, Mg, Mn, Mo, Nb, Si, Sn, Sr, Ti, V, W, and Zr, and X is or includes at least one or more of F, P, and S.

In the above chemical formula 11, 0.6≤x1≤1, 0≤y1≤0.4, and 0≤z1≤ 0.4, or 0.8≤x1≤1, 0≤y1≤0.2, and 0≤z1≤0.2.

Chemical formula 12: Liₐ₂Coₓ₂M³_{y2}O_{2-b2}X_{b2}.

In the above chemical formula 12, 0.9 ≤ a2≤1.8, 0.7≤x2≤1, 0≤y2≤0.3, 0.9≤x2+y2≤1.1, and 0≤b2≤0.1, M³ is or includes at least one or more of Al, B, Ba, Ca, Ce, Cr, Cu, Fe, Mg, Mn, Mo, Ni, Se, Si, Sn, Sr, Ti, V, W, Y, Zn, and Zr, and X is or includes at least one or more of F, P, and S.

Chemical formula 13: Liₐ₃Feₓ₃M⁴_{y3}PO_{4-b3}X_{b3}.

In the above chemical formula 13, 0.9 ≤ a3≤1.8, 0.6 ≤ x3≤1, 0≤y3≤0.4, and 0≤b3≤0.1, M⁴ is or includes at least one or more of Al, B, Ba, Ca, Ce, Co, Cr, Cu, Mg, Mn, Mo, Ni, Se, Si, Sn, Sr, Ti, V, W, Y, Zn, and Zr, and X is or includes at least one or more of F, P, and S.

Chemical formula 14: Liₐ₄Niₓ₄Mn_{y4}M⁵_{z4}O_{2-b4}X_{b4}.

In the above chemical formula 14, 0.9≤a4≤1.8, 0.8≤x4<1, 0<y4≤0.2, 0≤z4≤0.2, 0.9 ≤ x4+y4+z4≤1.1, and 0≤b4≤0.1, M⁵ is or includes at least one or more of Al, B, Ba, Ca, Ce, Cr, Fe, Mg, Mo, Nb, Si, Sn, Sr, Ti, V, W, and Zr, and X is or includes at least one or more of F, P, and S.

The positive electrode active material may be or include, for example, a high nickel-based positive electrode active material having a nickel amount greater than or equal to ≤ 80 mol%, greater than or equal to ≤ 85 mol%, greater than or equal to ≤ 90 mol%, greater than or equal to ≤ 91 mol%, or greater than or equal to ≤ 94 mol% and less than or equal to ≤ 99 mol%, based on 100 mol% of the metal excluding lithium in the lithium transition metal composite oxide. The high-nickel-based positive electrode active material may be capable of realizing high capacity and can be applied to a high-capacity, high-density rechargeable lithium battery.

The binder may allow the positive electrode active material particles to adhere to each other, and may also allow the positive electrode active material particles to adhere to the positive electrode current collector COL1. Representative examples of the binder may include, but are not limited to, at least one of polyvinyl alcohol, carboxymethylcellulose, hydroxypropylcellulose, diacetylcellulose, polyvinyl chloride, carboxylated polyvinylchloride, polyvinylfluoride, polymers including ethylene oxide, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resins, (meth)acrylic resins, polyester resins, nylon, and the like.

The conductive material may impart conductivity to the electrode, and any electronic conductive material can be used in the battery configured as long as the electronic conductive material does not cause any adverse chemical change. The conductive material may include, for example, but is not limited to, a carbon-based material such as at least one of natural graphite, artificial graphite, carbon black, acetylene black, Ketjen black, carbon fiber, carbon nanotube, carbon nanofiber, carbon nanobelt, carbon nanorod, or graphene; a metal-based material in the form of a metal powder or a metal fiber containing at least one of copper, nickel, aluminum, silver, or the like; a conductive polymer such as a polyphenylene derivative; or a mixture thereof.

The amount of the positive electrode active material may be in a range of ≥ 90 wt% to ≤ 99.5 wt% with respect to the total weight of the positive electrode active material layer AML1. The amount of the binder and the conductive material may be in a range of ≥ 0.1 wt% to ≤ 5 wt%, respectively, based on the total weight of the positive electrode active material layer AML1.

### Physical Properties of Positive electrode

FIG. 10 is a cross-sectional view of a functional layer according to one or more example embodiments of the present disclosure. The functional layer FNL is formed from the functional layer slurry FNS, and the additive ADT lowers the surface tension of the functional layer slurry FNS, so that the functional layer FNL can be uniformly, or substantially uniformly, coated. The additive ADT can reduce or suppress the formation of pinholes in the functional layer FNL.

The contact angle CTA of the functional layer slurry FNS can be measured to quantitatively evaluate the spreadability and wettability of the functional layer slurry FNS with respect to the electrode current collector COL1. The contact angle CTA may be measured using a contact angle meter (e.g., a goniometer). For example, after about 5 µL of the functional layer slurry FNS is dripped on the electrode current collector COL1, a side surface shape of a droplet formed by the functional layer slurry FNS is photographed, and the contact angle CTA can be calculated. The contact angle CTA may be defined as an internal angle formed by a tangent line at the boundary where the surface of the electrode current collector COL1 and the outer periphery of a droplet are in contact. The contact angle CTA can be measured based on the contact points on both the left and right sides, and then the contact angle CTA can be calculated by an average value of the two values.

When the contact angle CTA is measured using a contact angle meter, the contact angle CTA of the functional layer slurry FNS may be in a range of ≥ 5° to ≤ 36°, about 10° to ≤ 30°, or about 15° to ≤ 25°. When the contact angle CTA of the functional layer slurry FNS satisfies the above range, the functional layer slurry FNS may be uniformly, or substantially uniformly coated on the electrode current collector COL1. The functional layer slurry FNS may be formulated to reduce or suppress the formation of pinholes.

The quality of the positive electrode 10 according to examples of the present disclosure may be continuously, or substantially continuously, inspected using a vision inspection system. After the positive electrode sheet is fixed to the vision tester and imaged with a high-resolution camera, the application uniformity of the functional layer FNL may be evaluated by calculating the number of pinholes per 1,000 meters of specimen length using automatic analysis software.

The quality of the electrodes according to the present disclosure may be continuously, or substantially continuously, inspected using a vision inspection system. Since the electrode sheet is typically produced with a length of several hundred meters or more, it may be advantageous to quantify the quality based on a defined unit length for effective quality control per production unit (e.g., per roll). Accordingly, by defining the number of pinholes per 1,000 meters, consistency in product quality can be ensured, thereby contributing to improved mass production stability and yield.

In the inspection using the vision inspection system, the number of pinholes in the positive electrode 10 according to one or more example embodiments of the present disclosure may be within a range of 0 to 7, 0 to 10, or 0 to ≤ 15 per 1,000 meters, based on the total length of the positive electrode sheet. When the number of pinholes falls within the above range, surface defects of the positive electrode 10 can be effectively reduced or suppressed.

The adhesion of the functional layer FNL according to the present disclosure may be measured using a universal testing machine (UTM). For example, a test specimen with the functional layer FNL attached may be cut to a width of approximately 10 mm, and the functional layer FNL may be peeled from the positive electrode current collector COL1 at a rate of 100 mm/min using a tensile tester. The adhesion force may be defined as the force per unit width (gf/mm) required to separate the functional layer FNL.

According to one or more example embodiments of the present disclosure, the adhesion force of the functional layer FNL, measured under the above conditions, may be in the range of ≥ 10 gf/mm to ≤ 100 gf/mm. When the adhesion force falls within the above range, peeling or lifting of the functional layer FNL during subsequent processes can be effectively reduced or suppressed. In addition, the functional layer FNL can simultaneously or contemporaneously provide physical flexibility and interfacial stability.

### Method for manufacturing Positive electrode

Hereinafter, a method for manufacturing a positive electrode according to one or more example embodiments of the present disclosure is described with reference to the drawings. FIG. 11 to FIG. 14 are schematic views illustrating a method of manufacturing a positive electrode according to one or more example embodiments of the present disclosure. The method for manufacturing the positive electrode may include preparing a positive electrode current collector COL1, applying a functional layer slurry FNS on the positive electrode current collector COL1 to form a functional layer FNL, and applying a positive electrode active material slurry AMS on the functional layer FML to form a positive electrode active material layer AML1.

Referring to FIG. 11, the preparing of the positive electrode current collector COL1 may include driving the positive electrode current collector COL1 in the first direction illustrated by an arrow. The positive electrode current collector COL1 may include, for example, aluminum (Al).

Referring to FIG. 12, the forming of the functional layer FNL may include applying the functional layer slurry FNS onto the positive electrode current collector COL1. The application of the functional layer slurry FNS onto the positive electrode current collector COL1 may be performed by, e.g., a gravure coating method. For example, by passing the positive electrode current collector COL1 through the gravure roller GRL including concavities and convexities, the functional layer slurry FNS supported on the concavity and convexity of the gravure roll GRL can be coated on the positive electrode current collector COL1. The thickness of the functional layer FNL may be precisely adjusted by changing the number of meshes of the gravure roller GRL during gravure coating. By uniformly, or substantially uniformly forming the functional layer slurry FNS on the positive electrode current collector COL1 through the gravure coating method, the process consistency can be improved. Therefore, mass productivity and product quality in the mass production process can be improved.

As another example, an inkjet coating method may be used to apply the functional layer slurry FNS on the positive electrode current collector COL1. The inkjet coating may apply the composition onto the positive electrode current collector COL1 through an inkjet nozzle. The inkjet coating may improve the accuracy of the functional layer FNL by precisely adjusting the injection amount, position, and pattern of the functional layer slurry FNS. In particular, the functional layer slurry FNS may be applied relatively thinly to form a thin layer.

The functional layer slurry FNS may form the functional layer FNL. The functional layer slurry (FNS) may include ceramic particles CMP and an additive ADT. The ceramic particles CMP and the additive ADT are the same as the ceramic particles and the additive described above.

The functional layer slurry FNS may further include a binder. The binder in the functional layer slurry FNS may be the same as the binder in the above-described functional layer FNL.

The functional layer slurry FNS may further include a solvent. The solvent in the functional layer slurry FNS may include an aqueous solvent, an organic solvent, and the like.

The functional layer slurry FNS may further include a conductive material. The conductive material in the functional layer slurry FNS may be the same as the conductive material in the function layer FNL.

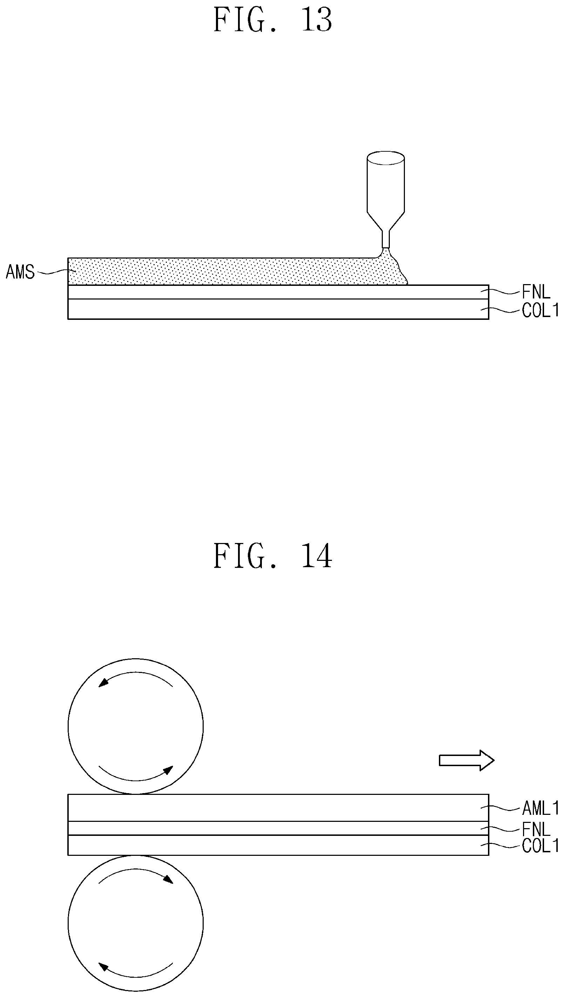

Referring to FIG. 13, the positive electrode active material layer AML1 may be formed on the functional layer FNL. As an example, the positive electrode active material layer AML1 may be formed by applying and drying the positive electrode active material slurry AMS on the functional layer FNL.

The positive electrode active material slurry AMS may further include a positive electrode active material, a binder, and a conductive material, but may further include other additives commonly used. The positive electrode active material slurry AMS may be or include a wet composition mixed with a solvent, but may be or include a dry composition that does not contain a solvent. The solvent may include an aqueous solvent, an organic solvent, and the like. When applying the wet composition, an additional drying process may be performed.

Referring to FIG. 14, the positive electrode 10 may be manufactured by integrally rolling (or calendering) the positive electrode current collector COL1, the functional layer FNL, and the positive electrode active material layer AML1. Through the rolling process, the mixture density of the positive electrode active material layer AML1 may be improved, and the energy density per unit volume may be improved. In addition, the electrochemical performance may be improved by improving the binding force between particles in the positive electrode active material layer AML1. By uniformly, or substantially uniformly, forming the positive electrode active material layer AML1 through the rolling process, the positive electrode 10 may have electrochemical stability and structural stability. In one or more example embodiments, the pressure during the rolling process may be in a range of ≥ 1.0 ton/cm² to ≤ 10.0 ton/cm². For example, the pressure during the rolling process may be in a range of ≥ 1.0 ton/cm² to ≤ 8.0 ton/cm².

Although the method for manufacturing the positive electrode has been described with reference to one or more example embodiments of the present disclosure, other conventional techniques related to the manufacture of rechargeable lithium batteries may also be applied.

### Negative Electrode 20

The negative electrode 20 for a rechargeable lithium battery may include a current collector COL2 and a negative electrode active material layer AML2 on the current collector COL2. The negative electrode active material layer AML2 may include a negative electrode active material, and may further include a binder and/or a conductive material (e.g., an electrically conductive material).

For example, the negative electrode active material layer AML2 may include about 90 wt% to ≤ 99 wt% of the negative electrode active material, about 0.5 wt% to ≤ 5 wt% of the binder, and about 0 wt% to ≤ 5 wt% of the conductive material.

The binder may attach the negative electrode active material particles to each other, and may also attach the negative electrode active material to the current collector COL2. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulosebased compound capable of imparting viscosity may be further included. The cellulosebased compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may impart conductivity (e.g., electrical conductivity) to the electrode. Any material that does not cause a chemical change (e.g., that does not cause an undesirable chemical change in the rechargeable lithium battery) and that conducts electrons can be used in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like, in the form of a metal powder or a metal fiber; a conductive polymer such as a polyphenylene derivative; or a mixture thereof.

The negative current collector COL2 may include at least one of a copper foil, a nickel foil, a stainless steel foil, a titanium foil, a nickel foam, a copper foam, a polymer substrate coated with a conductive metal, or a combination thereof.

### Negative Electrode Active Material

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon or a combination thereof. The crystalline carbon may be or include graphite such as non-shaped, sheet-shaped, flake-shaped, sphere-shaped, or fibershaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOx (0 < x < 2), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, SnO₂, a Sn-based alloy, or a combination thereof.

The silicon-carbon composite may be or include a composite of silicon and amorphous carbon. According to an example embodiment, the silicon-carbon composite may be in the form of silicon particles, and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be present between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be used in combination with a carbon-based negative electrode active material.

### Separator 30

Depending on the type of the rechargeable lithium battery, the separator 30 may be present between the positive electrode 10 and the negative electrode 20. The separator 30 may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof on one surface, or on both surfaces, of the porous substrate.

The porous substrate may be or include a polymer film formed of or including any one polyolefin such as at least one of polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked together.

### Electrolyte Solution ELL

The electrolyte solution ELL for a rechargeable lithium battery may include a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be used alone, or in combination of two or more solvents.

In addition, when using a carbonate-based solvent, a cyclic carbonate and a chain carbonate may be mixed together, and the cyclic carbonate and the chain carbonate may be mixed in a volume ratio in a range of ≥ 1:1 to ≤ 1:9.

The lithium salt dissolved in the organic solvent supplies lithium ions in a battery, enables an operation of a rechargeable lithium battery, and improves transportation of the lithium ions between positive and negative electrodes. Examples of the lithium salt include at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers in a range of 1 to 20), lithium trifluoromethane sulfonate, lithium tetrafluoroethanesulfonate, lithium difluorobis(oxalato)phosphate (LiDFBOP), Lithium difluoro(oxalato)borate (LiDFOB), and lithium bis(oxalato)borate (LiBOB).

### Rechargeable Lithium Battery 100

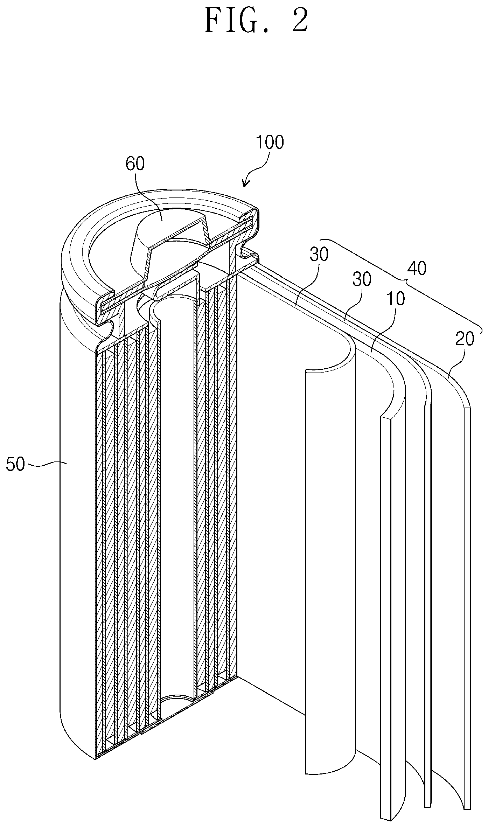

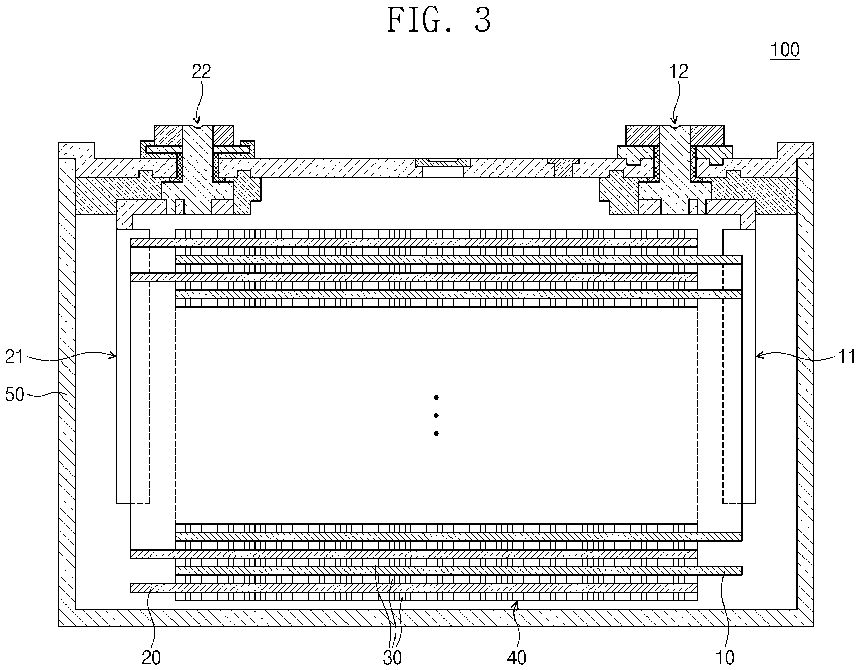

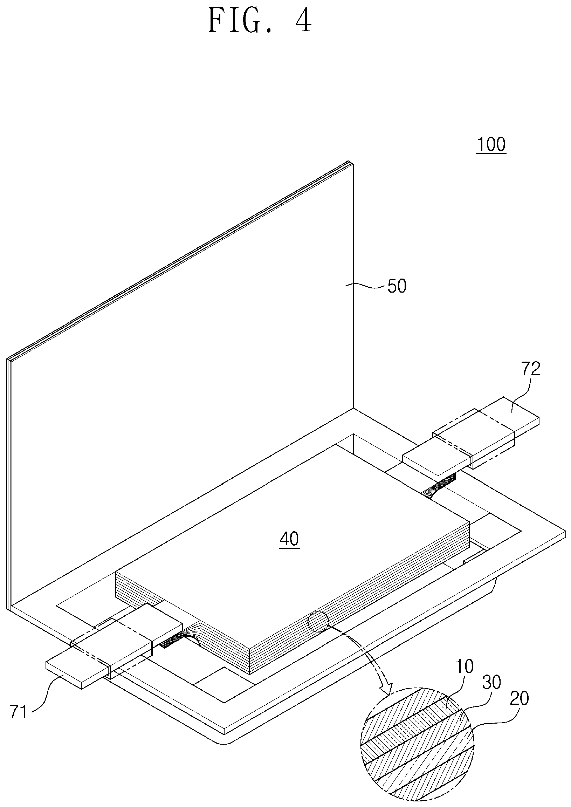

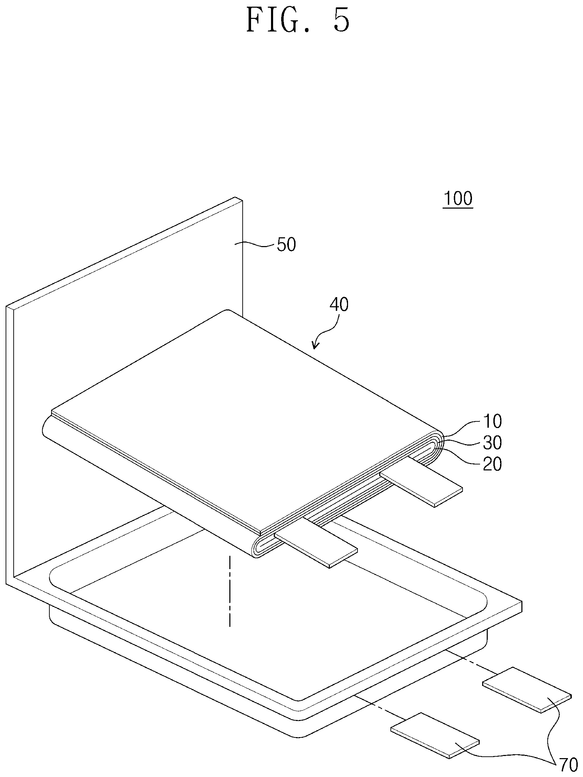

The rechargeable lithium battery 100 may be classified into cylindrical, prismatic, pouch, or coin-type batteries, and the like depending on their shape. FIG. 2 to FIG. 5 are schematic views illustrating a rechargeable lithium battery according to an example embodiment. FIG. 2 shows a cylindrical battery, FIG. 3 shows a prismatic battery, and FIG. 4 and FIG. 5 show pouch-type batteries. Referring to FIG. 2 to FIG. 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive lead tab 11, a positive terminal 12 connected to the positive lead tab 11, a negative lead tab 21, and a negative terminal 22 connected to the negative lead tab 21. As shown in FIG. 4 and FIG. 5, the rechargeable lithium battery 100 may include an electrode tab 70 illustrated in FIG. 5, or for example, a positive electrode tab 71 and a negative electrode tab 72 illustrated in FIG. 4, the electrode tabs 70/71/72 forming an electric path for inducing the current formed in the electrode assembly 40 to the outside of the battery 100.

The rechargeable lithium battery according to an example embodiment may be applicable to, e.g., automobiles, mobile phones, and/or various types of electric devices, as non-limiting examples.

Referring back to FIG. 7 and FIG. 8, rechargeable lithium battery 100 according to one or more example embodiments of the present disclosure may include a positive electrode 10, a negative electrode 20, and an electrolyte ELL between the positive electrode 10 and the negative electrode 20. The positive electrode 10 may include a positive electrode current collector COL1, a functional layer FNL on the positive electrode current collector COL1, and a positive electrode active material layer AML1 on the functional layer FNL. The functional layer FML may include ceramic particles CMP, and an additive ADT. The additive ADT may include at least one of a silicon-based additive, an acrylic-based additive, or a combination thereof.

The safety of the rechargeable lithium battery 100 may be quantitatively evaluated by calculating the unignited rate. The unignited rate may be measured by fully charging the battery and performing a nail penetration test using a metal nail with a diameter of 3 mm at a speed of 150 mm/sec. A test result is determined to be unignited if (when) no ignition, combustion, or explosion occurs after penetration. The unignited rate may be defined as the ratio of the number of unignited batteries to the total number of tested batteries.

The unignited rate of the rechargeable lithium battery 100 according to one or more example embodiments of the present disclosure may be about 90% or more, 95% or more, or 100%. When the unignited rate falls within the above range, the safety of the lithium secondary battery 100 can be ensured or improved even under internal short-circuit conditions. In addition, the rechargeable lithium battery 100 can significantly reduce the risk of thermal runaway and fire caused by external impact or damage. Accordingly, the rechargeable lithium battery 100 according to the present disclosure may be particularly suitable for applications requiring high safety such as, e.g., electric vehicles and energy storage systems (ESSs).

The quality of the rechargeable lithium battery 100 may be quantitatively evaluated by calculating the lifetime retention rate. The lifetime retention rate may be determined by repeatedly charging the battery at a current of 1.0 C and discharging the battery at a current of 1.0 C for 400 cycles within a voltage range of 3.0 V to 4.3 V at 45°C, and then calculating the ratio of the discharge capacity at the 400th cycle to the initial discharge capacity.

The lifetime retention rate of the rechargeable lithium battery 100 under the above conditions may be about 75% or more, 85% or more, or 90% or more. When the lifetime retention rate falls within the above range, the rechargeable lithium battery 100 can exhibit desired or improved capacity retention and reduced performance degradation, even after prolonged repeated charge/discharge cycles.

Hereinafter, the present disclosure is described in more detail with reference to Examples. However, these examples are intended to illustrate the present disclosure by way of example, and the scope of the present disclosure is not limited to these examples.

### Example 1

### (1) Production of Positive Electrode

### Function Layer

Boehmite as ceramic particles, polydimethylsiloxane as an additive, polyvinylidene fluoride (PVDF) as a binder, and carbon as a conductive material were mixed at a weight ratio of 83.9:0.1:15:1, and then dispersed in N-methyl-2-pyrrolidone to prepare a functional layer slurry.

An aluminum foil having dimensions of 80 mm × 1400 mm × 9 µm (width × length × thickness) was prepared as a positive electrode current collector. The prepared functional layer slurry was coated onto the aluminum foil to a thickness of 6 µm to form a functional layer.

### Positive Electrode Active Material Layer

LiCoO₂ as a positive electrode active material, polyvinylidene fluoride (PVDF) as a binder, and carbon as a conductive material were mixed at a weight ratio of 98.5:1:0.5, and then dispersed in N-methyl-2-pyrrolidone to prepare a positive electrode active substance slurry.

The prepared positive electrode active material slurry was applied onto the functional layer so as to have a thickness of 40 µm. After coating, the resultant was dried at 120 °C for 1 hour or more and then rolled (or pressed) to produce a positive electrode. The loading level was 17.5 mg/cm², and the mixture density was 4.2 g/cc.

### (2) Production of Negative Electrode

As a negative electrode active material, a mixture of artificial graphite and a silicon-carbon composite at a weight ratio of 93.5:6.5 was used. The negative electrode active material, a styrene-butadiene rubber (SBR), and carboxymethyl cellulose (CMC) were mixed at a weight ratio of 97:1:2 and dispersed in distilled water to prepare a negative electrode active material slurry.

The negative electrode active material slurry was coated onto a copper (Cu) foil having a thickness of 10 µm, dried at 100 °C, and then rolled (or pressed) to form a negative electrode active material layer.

### (3) Production of Electrolyte Solution

An electrolyte solution was prepared by dissolving 1.5 M lithium hexafluorophosphate (LiPF₆) in a carbonate-based solvent composed of ethylene carbonate (EC), ethyl methyl carbonate (EMC), and dimethyl carbonate (DMC) mixed at a volume ratio of 20:40:40.

### (4) Production of Rechargeable Lithium Battery

An electrode assembly was prepared by assembling the positive electrode and the negative electrode. The electrode assembly was housed in a pouch-type case, and then the electrolyte solution was injected to prepare a rechargeable lithium battery.

### Example 2

A positive electrode and a rechargeable lithium battery of Example 2 were fabricated in the same manner as in Example 1, except that boehmite (as ceramic particles), polydimethylsiloxane (as an additive), polyvinylidene fluoride (PVDF) (as a binder), and carbon (as a conductive material) were mixed at a weight ratio of 83.6:0.4:15:1.

### Example 3

A positive electrode and a rechargeable lithium battery of Example 3 were fabricated in the same manner as in Example 1, except that boehmite (as ceramic particles), polydimethylsiloxane (as an additive), polyvinylidene fluoride (PVDF) (as a binder), and carbon (as a conductive material) were mixed at a weight ratio of 83.2:0.8:15:1.

### Example 4

A positive electrode and a rechargeable lithium battery of Example 4 were fabricated in the same manner as in Example 1, except that polyacrylate (as an additive) was used.

### Example 5

A positive electrode and a rechargeable lithium battery of Example 5 were fabricated in the same manner as in Example 1, except that alumina (aluminum oxide, Al₂O₃) was prepared instead of boehmite as the ceramic particles.

### Example 6

A positive electrode and a rechargeable lithium battery of Example 6 were fabricated in the same manner as in Example 1, except that aluminum nitride (AlN) was prepared instead of boehmite as the ceramic particles.

### Example 7

A positive electrode and a rechargeable lithium battery of Example 7 were fabricated in the same manner as in Example 1, except that boron nitride (BN) was prepared instead of boehmite as the ceramic particles.

### Comparative Example 1

A positive electrode and a rechargeable lithium battery of Comparative Example 1 were fabricated in the same manner as in Example 1, except that the functional layer was omitted.

### Comparative Example 2

A positive electrode and a rechargeable lithium battery of Comparative Example 2 were fabricated in the same manner as in Example 1, except that the polydimethylsiloxane additive was not used and the composition of the functional layer slurry was changed to 84 wt% boehmite, 15 wt% binder, and 1 wt% conductive material.

### Comparative Example 3

A positive electrode and a rechargeable lithium battery of Comparative Example 3 were fabricated in the same manner as in Example 1, except that alumina (aluminum oxide, Al₂O₃) was prepared instead of boehmite as the ceramic particles, the polydimethylsiloxane additive was not used, and the composition of the functional layer slurry was adjusted to 84 wt% alumina (aluminum oxide, Al₂O₃), 15 wt% binder, and 1 wt% conductive material.

### Comparative Example 4

A positive electrode and a rechargeable lithium battery of Comparative Example 4 were fabricated in the same manner as in Example 1, except that aluminum nitride (AlN) was prepared instead of boehmite as the ceramic particles, the polydimethylsiloxane additive was not used, and the composition of the functional layer slurry was adjusted to 84 wt% aluminum nitride (AlN), 15 wt% binder, and 1 wt% conductive material.

### Comparative Example 5

A positive electrode and a rechargeable lithium battery of Comparative Example 5 were fabricated in the same manner as in Example 1, except that boron nitride (BN) was prepared instead of boehmite as the ceramic particles, the polydimethylsiloxane additive was not used, and the composition of the functional layer slurry was adjusted to 84 wt% boron nitride (BN), 15 wt% binder, and 1 wt% conductive material.

Examples, and Comparative Examples are collectively shown in Table 1 below.

**Table 1**

| | Ceramic Particle | Additive | Binder | Conductive Material |
|---|---|---|---|---|
| Example 1 | Boehmite 83.9 wt% | Polydimethylsiloxane 0.1 wt% | PVDF 15 wt% | 1 wt% carbon |
| Example 2 | Boehmite 83.6 wt% | Polydimethylsiloxane 0.4 wt% | PVDF 15 wt% | 1 wt% carbon |
| Example 3 | Boehmite 83.2 wt% | Polydimethylsiloxane 0.8 wt% | PVDF 15 wt% | 1 wt% carbon |
| Example 4 | Boehmite 83.9 wt% | Polyacrylate 0.1 wt% | PVDF 15 wt% | 1 wt% carbon |
| Example 5 | Alumina 83.9 wt% | Polydimethylsiloxane 0.1 wt% | PVDF 15 wt% | 1 wt% carbon |
| Example 6 | Aluminum nitride 83.9 wt% | Polydimethylsiloxane 0.1 wt% | PVDF 15 wt% | 1 wt% carbon |
| Example 7 | Boron nitride 83.9 wt% | Polydimethylsiloxane 0.1 wt% | PVDF 15 wt% | 1 wt% carbon |
| Comparativ e Example 1 | - | - | - | - |
| Comparativ e Example 2 | Boehmite 84 wt% | - | PVDF 15 wt% | 1 wt% carbon |
| Comparativ e Example 3 | Alumina 84 wt% | | PVDF 15 wt% | 1 wt% carbon |
| Comparativ e Example 4 | Aluminum nitride 84 wt% | | PVDF 15 wt% | 1 wt% carbon |
| Comparativ e Example 5 | Boron nitride 84 wt% | | PVDF 15 wt% | 1 wt% carbon |

### Evaluation Example 1: Evaluation of Contact Angle of Functional Layer Slurry

The contact angle was measured for each functional layer slurry of Examples 1 to 7 and Comparative Examples 2 to 5 to evaluate surface wettability. A Phoenix-MT contact angle measuring instrument (manufactured by SEO Corporation) was used for the measurement. The same aluminum foil as used in Example 1 was employed as the substrate, and its surface was cleaned with ethanol and dried. Approximately 5 µL of each slurry was dropped onto the surface of the aluminum foil using a microsyringe. The contact angle was evaluated by measuring the tangential angle formed between the left and right boundaries of the slurry droplet and the substrate surface. The measurement results are shown in Table 2.

**Table 2**

| | Functional Layer Slurry Contact Angle (°) |
|---|---|
| Comparative Example 2 | 34.5 ° |
| Comparative Example 3 | 36.5 ° |
| Comparative Example 4 | 38.2 ° |
| Comparative Example 5 | 37.1 ° |
| Example 1 | 20.5 ° |
| Example 2 | 19.5 ° |
| Example 3 | 19.0 ° |
| Example 4 | 26.0 ° |
| Example 5 | 23.1 ° |
| Example 6 | 24.3 ° |
| Example 7 | 23.7 ° |

Referring to Table 2, it can be seen that the Examples in which additives were used in the preparation of the functional layer slurry exhibited lower contact angles than the Comparative Examples in which no additive was used.

Specifically, Examples 1 to 4 using boehmite as the ceramic particles showed lower contact angles compared to Comparative Example 2; Example 5 using alumina as the ceramic particles showed a lower contact angle compared to Comparative Example 3; Example 6 using aluminum nitride as the ceramic particles showed a lower contact angle compared to Comparative Example 4; Example 7 using boron nitride as the ceramic particles showed a lower contact angle compared to Comparative Example 5. This indicates that Examples 1 to 7 exhibited desired or improved wettability of the functional layer slurry, and that the slurry was more uniformly applied to the substrate.

### Evaluation Example 2: Evaluation of Number of Pinholes in Positive Electrode

The number of pinholes in the positive electrodes of Examples 1 to 7 and Comparative Examples 2 to 5 was measured to evaluate the application uniformity of the functional layer. The measurements were performed using a Nexstar Vision Inspector. Each positive electrode was fixed to a vision tester and imaged with a high-resolution camera, and the number of pinholes per 1,000 meters of specimen length was analyzed using automatic analysis software. The results are shown in Table 3.

**Table 3**

| | Number of Pinholes (ea/1000 m) |
|---|---|
| Comparative Example 2 | 14 ea |
| Comparative Example 3 | 15 ea |
| Comparative Example 4 | 19 ea |
| Comparative Example 5 | 18 ea |
| Example 1 | 0 ea |
| Example 2 | 0 ea |
| Example 3 | 0 ea |
| Example 4 | 6 ea |
| Example 5 | 0 ea |
| Example 6 | 0 ea |
| Example 7 | 0 ea |

Referring to Table 3, it can be confirmed that the occurrence of pinholes in the functional layer was reduced or suppressed in Examples 1 to 7, in which the additive was used in the preparation of the functional layer slurry, compared to Comparative Examples 2 to 5, in which no additive was used. In particular, in Examples 1 to 3 and 5 to 7, where polydimethylsiloxane was used as the additive, the number of pinholes was zero, confirming desired or improved coating uniformity and defect reduction or suppression performance.

### Evaluation Example 3: Evaluation of Adhesion of Functional Layer in Positive Electrode

A peel test was performed on the positive electrodes of Examples 1 to 7 and Comparative Examples 2 to 5 to evaluate the adhesion characteristics of the functional layer. The test was conducted using an Instron tensile tester. Each electrode was cut to a width of approximately 10 mm and pulled at a rate of 100 mm/min to measure the adhesive force, such that the functional layer was peeled from the aluminum foil substrate. The force per unit width (gf/mm) required to separate the functional layer was recorded as the adhesion force. The results are shown in Table 4.

**Table 4**

| | Adhesion of Functional Layer (gf/mm) |
|---|---|
| Comparative Example 2 | 25.4 gf/mm |
| Comparative Example 3 | 25.6 gf/mm |
| Comparative Example 4 | 24.8 gf/mm |
| Comparative Example 5 | 25.1 gf/mm |
| Example 1 | 25.4 gf/mm |
| Example 2 | 16.5 gf/mm |
| Example 3 | 11.2 gf/mm |
| Example 4 | 25.1 gf/mm |
| Example 5 | 25.2 gf/mm |
| Example 6 | 24.6 gf/mm |
| Example 7 | 24.9 gf/mm |

Referring to Table 4, it can be seen that Examples 1 to 7 exhibited adhesion strength comparable to the adhesion strength of Comparative Examples 2 to 5.

### Evaluation Example 4: Evaluation of Unignited Rate of Rechargeable Lithium Battery

A nail penetration test was performed on the rechargeable lithium batteries of Examples 1 to 7 and Comparative Examples 1 to 5 to evaluate battery safety. The test was conducted using a DUOCOM universal testing machine. Each fully charged cell (100% state of charge, SOC) was penetrated at a speed of 150 mm/sec using a nail with a diameter of 3 mm. During the test, a result was determined as "NG" if an abnormal reaction such as smoke, ignition, or explosion occurred, and as "OK" if penetration was completed without such an abnormality. The results are shown in Table 5.

**Table 5**

| | Penetration of Nail (OK rate, %) |
|---|---|
| Comparative Example 1 | 0% |
| Comparative Example 2 | 83% |
| Comparative Example 3 | 82% |
| Comparative Example 4 | 80% |
| Comparative Example 5 | 81% |
| Example 1 | 100% |
| Example 2 | 100% |
| Example 3 | 100% |
| Example 4 | 86% |
| Example 5 | 100% |
| Example 6 | 100% |
| Example 7 | 100% |

Referring to Table 5, it can be seen that Comparative Example 1 in which the functional layer was not present had insufficient heat blocking capability. It can be confirmed that Examples 1 to 7 in which the additive was used in the production of the functional layer slurry had ignition generation and short-circuit suppression performance when compared with Comparative Examples 2 to 5 in which the additive is not used in the production the functional layer slurry. Examples 1 to 3 and 5 to 7 in which the polydimethylsiloxane additive was used in the production of the functional layer slurry had no ignition in all the cells, and thus it was found that Examples 1 to 3 and 5 to 7 had extremely desired or improved thermal stability and short-circuit suppression performance.

### Evaluation Example 5: Evaluation of Lifetime Retention Rate of Rechargeable Lithium Battery

Charge/discharge cycle tests were conducted on the rechargeable lithium batteries of Examples 1 to 7 and Comparative Examples 1 to 5 to evaluate high-temperature cycle life characteristics. The test was performed by repeating 400 cycles of charging and discharging at 1.0 C within a voltage range of 3.0 V to 4.3 V at 45 °C. The lifetime retention rate was calculated as the ratio of the discharge capacity after 400 cycles to the initial discharge capacity. The results are shown in Table 6.

**Table 6**

| | 45 °C Lifetime Retention (400 cycles, %) |
|---|---|
| Comparative Example 1 | 93.7% |
| Comparative Example 2 | 93.2% |
| Comparative Example 3 | 92.9% |
| Comparative Example 4 | 93.1% |
| Comparative Example 5 | 92.7% |
| Example 1 | 93.0% |
| Example 2 | 91.6% |
| Example 3 | 90.5% |
| Example 4 | 92.9% |
| Example 5 | 92.7% |
| Example 6 | 92.9% |
| Example 7 | 92.4% |

Referring to Table 6, it can be seen that Examples 1 to 7 exhibited comparable lifetime retention rates to the lifetime retention rates of Comparative Examples 1 to 5.

The positive electrode according to the present disclosure and the rechargeable lithium battery including the positive electrode may have desired or improved safety and high-temperature life characteristics while reducing or suppressing the occurrence of pinholes in the functional layer.

While the present disclosure has been described with reference to example embodiments, it should be understood that these example embodiments are provided for illustrative purposes only and do not limit the scope of the present disclosure. Various modifications and equivalent arrangements may be made without departing from the spirit and scope of the appended claims. Accordingly, the described embodiments should be regarded as examples rather than limitations of the present disclosure.

## Claims

1. A positive electrode (10) for a rechargeable lithium battery (100), the positive electrode (10) comprising:
a positive electrode current collector (COL1);
a functional layer on the positive electrode current collector (COL1); and
a positive electrode active material layer on the functional layer,
wherein the functional layer comprises ceramic particles and an additive, and
wherein the additive comprises at least one of a silicone-based additive, an acrylic-based additive, and a combination thereof.

2. The positive electrode (10) of claim 1, wherein the silicone-based additive comprises at least one of polydimethylsiloxane, polymethylalkylsiloxane, and a combination thereof.

3. The positive electrode (10) of claim 1 or 2, wherein the acrylic-based additive comprises polyacrylate.

4. The positive electrode (10) of any of the claims 1 to 3, wherein an amount of the additive is in a range from ≥ 0.08 wt% to ≤ 0.8 wt% relative to a total weight of the functional layer.

5. The positive electrode (10) of any of the claims 1 to 4, wherein the ceramic particles comprise at least one of boehmite, alumina (aluminum oxide, Al₂O₃), aluminum nitride (AlN), boron nitride (BN), zirconia (zirconium dioxide, ZrO₂), titania (titanium dioxide, TiO₂), silica (silicon dioxide, SiO₂), silicon nitride (Si₃N₄), zeolite, kaolinite, and a combination thereof.

6. The positive electrode (10) of any of the claims 1 to 5, wherein an amount of the ceramic particles is in a range from ≥ 80 wt% to ≤ 90 wt% relative to a total weight of the functional layer.

7. The positive electrode (10) of any of the claims 1 to 6, wherein a thickness of the functional layer is in a range of ≥ 0.1 µm to ≤ 10 µm.

8. The positive electrode (10) of any of the claims 1 to 7, wherein a thickness ratio of the functional layer to the positive electrode active material layer is in a range of ≥ 1:5 to ≤ 1:100.

9. The positive electrode (10) of any of the claims 1 to 8, wherein the functional layer further comprises a conductive material, and
wherein the conductive material comprises at least one of graphite, carbon black, acetylene black, carbon nanotubes, carbon nanofibers, carbon nanobelts, carbon nanorods, graphene, and a combination thereof.

10. The positive electrode (10) of any of the claims 1 to 9, wherein the functional layer is formed from a functional layer slurry, and
wherein a contact angle of the functional layer slurry is in a range from ≥ 15° to ≤ 25°.

11. A positive electrode (10) for a rechargeable lithium battery (100), the positive electrode (10) comprising:
a positive electrode current collector (COL1); and
a positive electrode mixture layer on the positive electrode current collector (COL1),
wherein the positive electrode mixture layer includes a functional layer and a positive electrode active material layer that are stacked on the positive electrode current collector (COL1),
wherein the functional layer comprises ceramic particles,
wherein the positive electrode active material layer comprises positive electrode active material particles, and
wherein the positive electrode mixture layer comprises at least one of a silicone-based additive, an acrylic-based additive, and a combination thereof.

12. The positive electrode (10) of claim 11, wherein the functional layer comprises the silicone-based additive.

13. The positive electrode (10) of claim 11 or 12, wherein the silicone-based additive comprises at least one of polydimethylsiloxane, polymethylalkylsiloxane, and a combination thereof.

14. The positive electrode (10) of any of the claims 11 to 13, wherein the ceramic particles comprise at least one of boehmite, alumina (aluminum oxide, Al₂O₃), aluminum nitride (AlN), boron nitride (BN), zirconia (zirconium dioxide, ZrO₂), titania (titanium dioxide, TiO₂), silica (silicon dioxide, SiO₂), silicon nitride (Si₃N₄), zeolite, kaolinite, and a combination thereof.

15. A rechargeable lithium battery (100) comprising:
the positive electrode (10) as claimed in any of the claims 1 to 14;
a negative electrode (20); and
an electrolyte between the positive electrode (10) and the negative electrode (20).
